# EUROPEAN PATENT SPECIFICATION

(11) **EP 4 206 677 B1**
(45) Date of publication and mention of the grant of the patent: **04.02.2026**
(21) Application number: 22217214.0
(22) Date of filing: 29.12.2022
(51) Int. Cl.: G01N 35/04

(54) **CIRCULATING DEVICE AND SAMPLE ANALYZER**
ZIRKULATIONSVORRICHTUNG UND PROBENANALYSATOR
DISPOSITIF DE CIRCULATION ET ANALYSEUR D'ÉCHANTILLON

(30) Priority: 31.12.2021 CN 202111678360
(43) Date of publication of application: 05.07.2023
(73) Proprietor: Shenzhen New Industries Biomedical Engineering Co., Ltd., Shenzhen, Guangdong 518122 (CN)
(72) Inventor: ZHU, LIANG, Shenzhen, 518122 (CN); DENG, YAOCHAO, Shenzhen, 518122 (CN); GENG, TAO, Shenzhen, 518122 (CN)
(74) Representative: Berggren Oy

(56) References cited:
- CN-A- 109 765 394
- US-A1- 2002 012 611
- US-A1- 2020 209 269

## Description

### Cross-Reference to Related Application

The invention claims the priority to Chinese Patent Application No. CN202111678360.3, filed to the Chinese Patent Office on December 31, 2021 and entitled "Circulating Device and Sample Analyzer".

### Technical Field

The present invention relates to a technical field of medical apparatus and instruments, in particular to a circulating device according to claim 1 and a sample analyzer according to claim 12.

### Background

A circulating device is usually used to convey a bearing box with a reaction vessel to an output mechanism, so that a manipulator takes away the reaction vessel on the bearing box. After all the reaction vessels on the bearing box are taken away, the empty bearing box will be conveyed to a recycling mechanism of the circulating device for reuse of the bearing box. However, for the traditional circulating device, the path that the bearing box moves to the output mechanism and moves from the output mechanism to the recycling mechanism is complicated, which makes the whole circulating device bulky, and then affects the structural compactness of the circulating device.

Examples of the circulating device and the sample analyzer according to the prior art is known from US 2002012611 A1, US 2020209269 A1 and CN 109765394 A.

### Summary

A technical problem to be solved by the present invention is how to make the structure of a circulating device more compact.

The invention is as defined in claim 1.

In an embodiment, the path of conveying the bearing box from the input mechanism to the output mechanism and the path of conveying the bearing box from the output mechanism to the recycling mechanism are the same path.

In an embodiment, the circulating device further includes a push-and-pull synchronous belt, which is arranged on the base and connected with the supporting seat.

In an embodiment, the transferring component further includes a rotating shaft and a driver. The two conveyor belt units are respectively sleeved on the opposite ends of the rotating shaft, and the driver is located between the two conveyor belt units and drives the rotating shaft to rotate.

In an embodiment, the transferring mechanism further includes transferring bodies in one-to-one correspondence with the conveyor belt units. Each of the transferring bodies includes a bearing plate, and a fixing plate and a limiting plate which are connected to opposite sides of the bearing plate, respectively. The fixing plate and the limiting plate are separately located on opposite sides in a thickness direction of the bearing plate. The bearing plate is penetrated in a gap between a tight edge and a loose edge of the conveyor belt unit. The fixing plate and the limiting plate are separately located on two sides of the conveyor belt unit.

In an embodiment, the input mechanism includes an input bracket for carrying the bearing box, and the output mechanism includes an output bracket for carrying the bearing box. A width of both the input bracket and the output bracket is less than a gap between the two conveyor belt units.

In an embodiment, both the input bracket and the output bracket move along a direction of gravity relative to the mounting rack, and the bearing box moves on the transferring component along a direction perpendicular to gravity.

In an embodiment, the input mechanism further includes a supporting plate rotationally arranged on the mounting rack. The supporting plate can rotate around a central axis perpendicular to a direction of gravity to have an avoiding position and a supporting position. The supporting plate departs from the bearing box at the avoiding position, and carries the bearing box at the supporting position.

In an embodiment, the input mechanism further includes a motor arranged on the mounting rack. The motor drives the supporting plate to rotate.

In an embodiment, the recycling mechanism includes a recycling bracket for carrying the bearing box. A width of the recycling bracket is greater than a gap between the two conveyor belt units.

In an embodiment, the recycling bracket moves along the direction of gravity relative to the mounting rack, and the bearing box moves on the transferring component along a direction perpendicular to gravity.

In an embodiment, the recycling bracket includes a sliding part and a turning part which are rotationally connected. The sliding part can slide relative to the mounting rack, the turning part can rotate around a central axis perpendicular to a direction of gravity to have a carrying position, and the turning part can carry the bearing box at the carrying position. During the sliding part moves close to the conveyor belt unit, the bearing box can push the turning part to rotate away from the carrying position.

In an embodiment, the recycling bracket further includes an elastic part. The elastic part is connected between the sliding part and the turning part. The elastic part stores energy when the turning part moves away from the carrying position. The elastic part releases energy so that the turning part moves close to the carrying position.

In an embodiment, the number of the sliding parts is two. A spacing direction of the two sliding parts is the same as a spacing direction of the two conveyor belt units, and a spacing distance between the two sliding parts is greater than a gap between the two conveyor belt units.

In an embodiment, the input mechanism, the output mechanism and the recycling mechanism are all located on a upper side of the transferring component.

A sample analyzer according to claim 12 is provided.

A technical effect of an embodiment of the present invention is that the transferring component conveys the bearing box holding the reaction vessel from the input mechanism to the output mechanism, thereby realizing the output of the bearing box. After the reaction vessel on the bearing box is unloaded on the output mechanism, the transferring component conveys the bearing box, the reaction vessel held by which has been unloaded, from the output mechanism to the recycling mechanism, thereby realizing the recycle of the bearing box. Therefore, in the process of outputting and recycling the bearing box, the outputting and recycling of the bearing box is realized by the same transferring component, which omits the setting of other transferring components. In this way, not only the structure of the whole circulating device can be simplified, but also the volume of the whole circulating device can be small, so the structure is more compact, and the instrument space occupied by the circulating device is reduced.

### Brief Description of the Drawings

Fig. 1 is a three-dimensional structure diagram of a bearing box.
Fig. 2 is a three-dimensional structure diagram of a circulating device provided by an embodiment.
Fig. 3 is a local structure diagram of the circulating device shown in Fig. 1.
Fig. 4 is a local structure diagram of the circulating device including a mounting rack and a transferring mechanism shown in Fig. 1.
Fig. 5 is a structure diagram from another perspective of Fig. 4.
Fig. 6 is a local structure diagram of the circulating device including a base, a push-and-pull synchronous belt, and a push-and-pull motor shown in Fig. 1.
Fig. 7 is a local structure diagram of the circulating device including an input mechanism shown in Fig. 1.
Fig. 8 is a structure diagram of the circulating device where a supporting plate is at a supporting position to support a bearing box shown in Fig. 1.
Fig. 9 is a three-dimensional structure diagram of an output mechanism in the circulating device shown in Fig. 1.
Fig. 10 is a local structure diagram of the circulating device including a recycling mechanism shown in Fig. 1.
Fig. 11 is a structure diagram of the circulating device where a supporting plate is at a carrying position to support a bearing box shown in Fig. 1.

### Detailed Description of the Embodiments

In order to facilitate the understanding of the present invention, the present invention will be described more comprehensively below with reference to the relevant accompanying drawings. Better implementation modes of the present invention are given in the accompanying drawings.

It is to be noted that when a component is "fixed to" another component, it can be directly on another component, or there may be an intermediate component between them. When a component is considered to be "connected to" another component, it can be directly connected to another component, or there may be an intermediate component between them. The terms "inside", "outside", "left", "right" and similar expressions used herein are for illustrative purposes only and are not meant to be the only implementation mode.

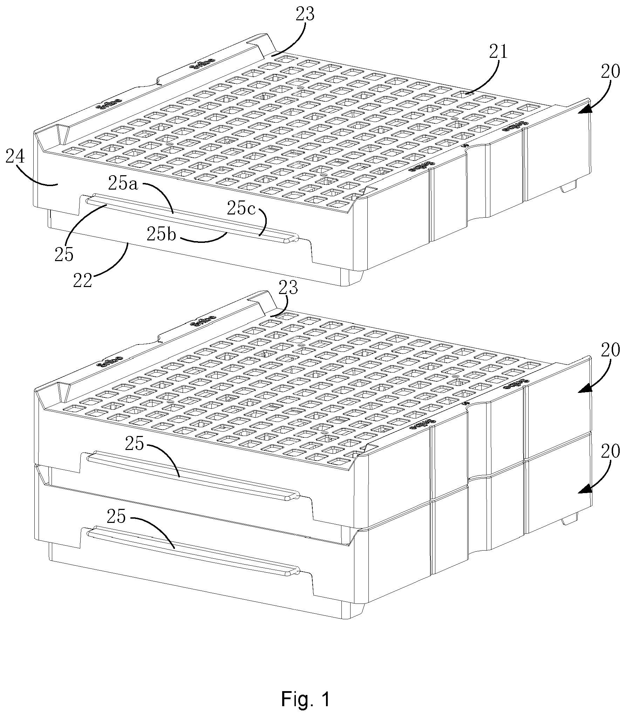

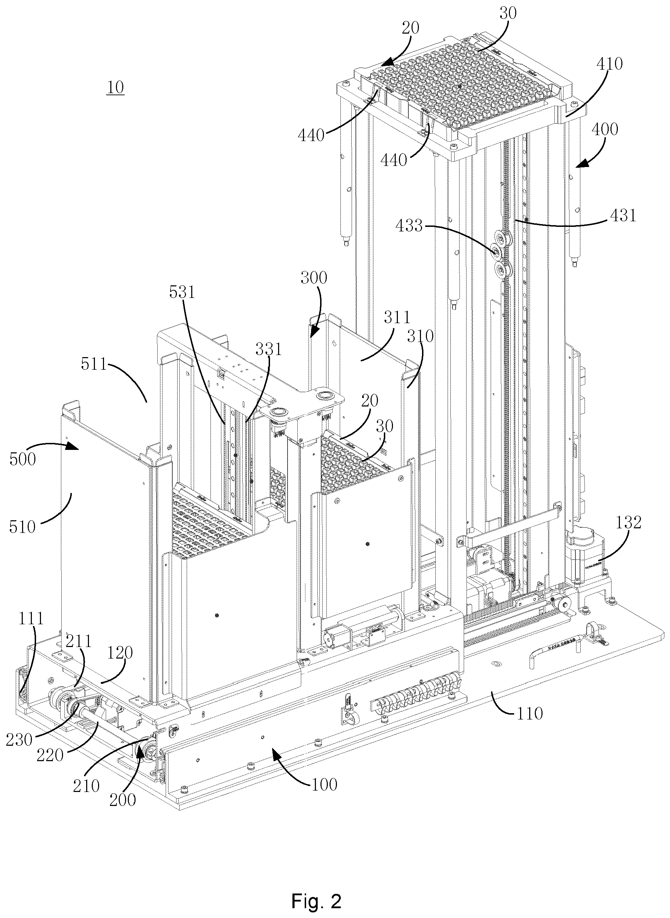

Referring to Fig. 1 and Fig. 2, a circulating device 10 provided in the present invention is configured to load and recycle a bearing box 20. The bearing box 20 is roughly of a rectangular shape, a plurality of holding holes 21 are provided in the bearing box 20, the holding holes 21 may be arranged in a matrix pattern with multiple rows and columns, and a reaction vessel 30 cooperates with the holding hole 21, so that multiple reaction vessels 30 can be held in a bearing box 20 at the same time. It is apparent that the reaction vessel 30 and the holding hole 21 may form a one-to-one correspondence. The bearing box 20 has a bottom surface 22, a top surface 23, and a side circumferential surface 24. The bottom surface 22 and the top surface 23 are two end faces set horizontally in the thickness direction of the bearing box 20. The side circumferential surface 24 is connected between the top surface 23 and the bottom surface 22 and set vertically. The holding hole 21 is provided on the top surface 23. The bearing box 20 further includes a side cap 25 arranged on the side circumferential surface 24. The side cap 25 protrudes a certain length relative to the side circumferential surface 24. The number of side caps 25 may be two, and the two side caps 25 may be located either at two ends in the length direction of the bearing box 20, or at two ends in the width direction of the bearing box 20. The side cap 25 has an upper surface 25a, a lower surface 25b, and a side 25c. The side 25c is connected between the upper surface 25a and the lower surface 25b and set vertically. The upper surface 25a is close to the top surface 23 and set horizontally. The lower surface 25b is close to the bottom surface 22 and set horizontally. A plurality of bearing boxes 20 may be superposed on each other along their thickness direction. For two adjacent bearing boxes 20 in the superposed state, the top surface 23 of one bearing box 20 will abut against the bottom surface 22 of the other bearing box 20.

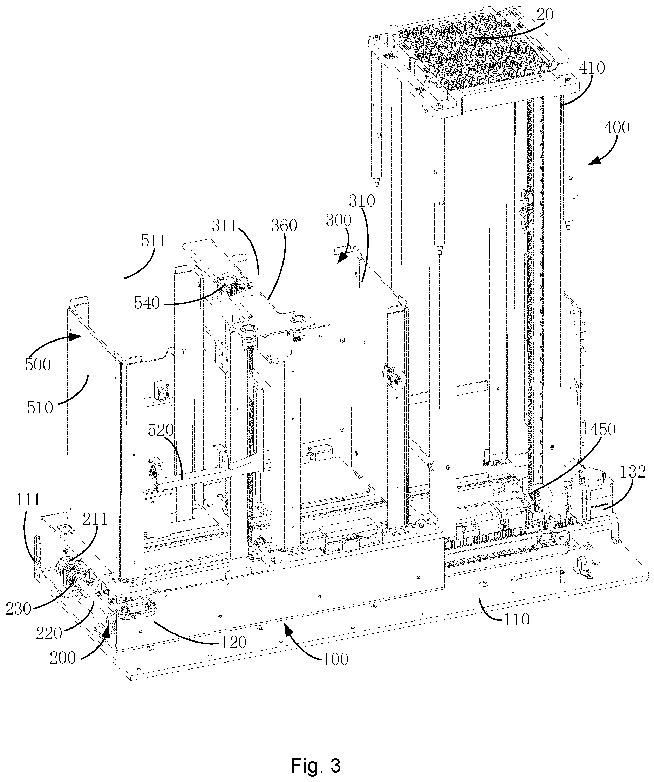

Referring to Fig. 2 and Fig. 3, a circulating device 10 includes a mounting rack 100, a transferring mechanism 200, an input mechanism 300, an output mechanism 400, and a recycling mechanism 500. The transferring mechanism 200, the input mechanism 300, the output mechanism 400, and the recycling mechanism 500 are all arranged on the mounting rack 100.

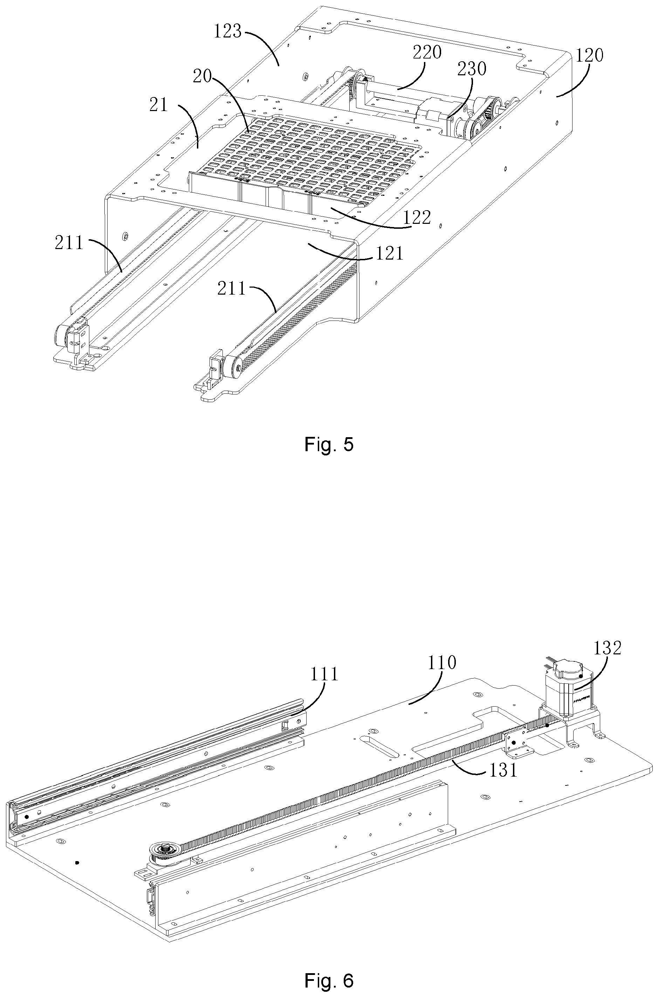

Referring to Fig. 2, Fig. 3 and Fig. 6, according to claim 1, the mounting rack 100 includes a base 110 and a supporting seat 120. A guide rail 111 may be arranged on the base 110, and the supporting seat 120 is connected with the guide rail 111 in a sliding manner. The guide rail 111 extends along the horizontal direction. The direction of gravity is understood as the vertical direction. It is apparent that the horizontal direction is perpendicular to the direction of gravity, so the supporting seat 120 may slide back and forth in the horizontal direction relative to the base 110, so that the supporting seat 120 acts like a "drawer". The circulating device 10 may further include a push-and-pull synchronous belt 131 and a push-and-pull motor 132. The push-and-pull motor 132 is configured to drive the push-and-pull synchronous belt 131 to move, so that a tight edge or loose edge of the push-and-pull synchronous belt 131 moves in a straight line along the horizontal direction. The supporting seat 120 may be fixed on the tight edge or loose edge of the push-and-pull synchronous belt 131, so that the push-and-pull synchronous belt 131 drives the supporting seat 120 to move back and forth in a straight line relative to the base 110 along the horizontal direction.

In some embodiments, the input mechanism 300 and the recycling mechanism 500 can slide relative to the output mechanism 400 at the same time. For example, the output mechanism 400 is fixed on the base 110, the supporting seat 120 is connected with the base 110 in a sliding manner, and the input mechanism 300 and the recycling mechanism 500 are both arranged on the supporting seat 120. In this way, the situation that the input mechanism 300, the recycling mechanism 500 and the output mechanism 400 are carried on the supporting seat 120 at the same time and slide synchronously can be avoided, thus reducing the weight carried by the supporting seat 120, also reducing the sliding distance of the supporting seat 120 relative to the base 110, and finally improving the sensitivity of the supporting seat 120 in the sliding process and the accuracy of the sliding trail.

Referring to Fig. 2 and Fig. 3, the output mechanism 400 is fixed on the base 110, and the input mechanism 300 and the recycling mechanism 500 are fixed on the supporting seat 120, so that the input mechanism 300 can be located between the output mechanism 400 and the recycling mechanism 500 along the horizontal direction. When the supporting seat 120 slides relative to the base 110, both the input mechanism 300 and the recycling mechanism 500 can slide close to or away from the output mechanism 400 at the same time. In other words, both the input mechanism 300 and the recycling mechanism 500 can slide synchronously relative to the base 110, while the output mechanism 400 cannot slide relative to the base 110. In view of the fact that the supporting seat 120 only carries the input mechanism 300 and the recycling mechanism 500, the output mechanism 400 is no longer arranged on the supporting seat 120. In this way, on the one hand, the weight carried by the supporting seat 120 can be reduced, so as to reduce the weight carried by the guide rail 111 on the base 110; on the other hand, the sliding distance of the supporting seat 120 relative to the guide rail 111 can be reduced, so as to prevent the guide rail 111 from bending, deforming or even being damaged due to excessive load and too long relative sliding distance, and ensure that the supporting seat 120 can slide smoothly through the guide rail 111 relative to the base 110, and improving the sensitivity of the supporting seat 120 in the sliding process and the accuracy of the sliding trail.

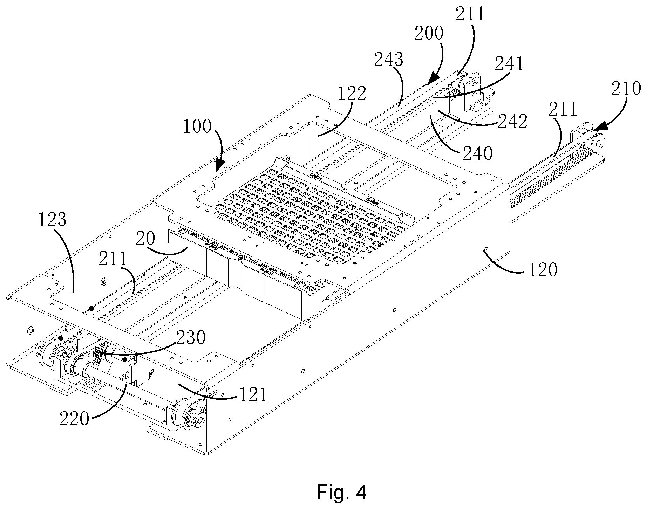

Referring to Fig. 3, Fig. 4 and Fig. 5, there are an accommodating cavity 121, an input hole 122 and a recycling hole 123 arranged on the supporting seat 120. The accommodating cavity 121 is located below the input hole 122 and the recycling hole 123. Both the input hole 122 and the recycling hole 123 are connected with the accommodating cavity 121. The input mechanism 300 is arranged at the position of the input hole 122, the recycling mechanism 500 is arranged at the position of the recycling hole 123, and part of the transferring mechanism 200 is accommodated in the accommodating cavity 121.

According to claim 1, ,the transferring mechanism 200 is arranged on the supporting seat 120, so that the transferring mechanism 200 moves following the supporting seat 120 relative to the base 110; therefore, when the supporting seat 120 moves, the transferring mechanism 200, the input mechanism 300 and the recycling mechanism 500 slides close to or away from the output mechanism 400 following the supporting seat 120, which avoids the problem of misalignment between the input hole 122 and the recycling hole 123 and the transferring mechanism 200 caused by the deviation between the position after the movement and the position before the movement of the supporting seat 120, ensures that after the movement of the supporting seat 120, the input mechanism 300 can still accurately convey the bearing box 20 to the transferring mechanism 200 through its corresponding input hole 122, and the recycling mechanism 500 accurately recycles the bearing box 20 on the transferring mechanism 200 through its corresponding recycling hole 123.

The transferring mechanism 200 includes a transferring component 210 and a transferring body 240. The transferring component includes a rotating shaft 220, a driver 230 and a conveyor belt unit 211. The number of conveyor belt units 211 is two. The two conveyor belt units 211 are arranged at intervals in the horizontal plane along the sliding direction perpendicular to the supporting seat 120. Each conveyor belt unit 211 may include a synchronous belt. The tight edge or loose edge of the conveyor belt unit 211 may move in a straight line along the sliding direction of the supporting seat 120. One part of the conveyor belt unit 211 is accommodated in the accommodating cavity 121, and the other part is outside the accommodating cavity 121. The part, in the accommodating cavity 121, of the conveyor belt unit 211 corresponds to the input mechanism 300 and the recycling mechanism 500, and the part, outside the accommodating cavity 121, of the conveyor belt unit 211 corresponds to the output mechanism 400. The input mechanism 300, the output mechanism 400, and the recycling mechanism 500 are all located on the upper side of the conveyor belt unit 211.

The rotating shaft 220 is rotationally arranged on the supporting seat 120. The two conveyor belt units 211 are respectively sleeved on the opposite ends of the rotating shaft 220. The driver 230 is arranged on the supporting seat 120. The driver 230 may be a belt driver. When the driver 230 drives the rotating shaft 220 to rotate, the rotating shaft 220 simultaneously drives the two conveyor belt units 211 to move synchronously. When the bearing box 20 is carried on the tight edge or loose edge of the two conveyor belt units 211, the bearing box 20 can move synchronously following the two conveyor belt units 211, so as to realize the conveying of the whole transferring component 210 to the bearing box 20.

The number of transferring bodies 240 is equal to the number of conveyor belt units 211, and the two form a one-to-one correspondence. The transferring body 240 includes a bearing plate 241, a fixing plate 242, and a limiting plate 243. The bearing plate 241, the fixing plate 242 and the limiting plate 243 are connected in a bending manner. Specifically, the bearing plate 241 is arranged roughly horizontally, the fixing plate 242 and the limiting plate 243 can be arranged roughly vertically, the fixing plate 242 and the limiting plate 243 are connected to the opposite sides of the bearing plate 241 respectively, and the fixing plate 242 and the limiting plate 243 are separately located on the opposite sides of the bearing plate 241 in the thickness direction. The fixing plate 242 is fixedly connected with the supporting seat 120, so that the whole transferring body 240 is fixed on the supporting seat 120. After the transferring body 240 is fixed, the bearing plate 241 is threaded in the gap between the tight edge and the loose edge of the conveyor belt unit 211, and the fixing plate 242 and the limiting plate 243 are separately located on the opposite sides of the conveyor belt unit 211, so that the limiting plate 243 can be located beside the tight edge of the conveyor belt unit 211, while the fixing plate 242 can be located beside the loose edge of the conveyor belt unit 211. When the conveyor belt unit 211 conveys the bearing box 20, the bearing plate 241 may share part of the gravity of the bearing box 20. The bearing plate 241 may also prevent the conveyor belt unit 211 from bending and deforming under the pressure of the bearing box 20; at the same time, the limiting plate 243 may prevent the bearing box 20 from detaching from the conveyor belt unit 211, and the limiting plate 243 plays a good role in limiting the motion trail of the bearing box 20. Therefore, by setting the transferring body 240, it can be ensured that the conveyor belt unit 211 conveys smoothly the bearing box 20 along a set straight-line trail.

Referring to Fig. 2, Fig. 3, Fig. 7 and Fig.8, in some embodiments, the input mechanism 300 includes an input frame 310, an input bracket 320, an input power source 330, a supporting plate 340 and a motor 350. The input frame 310 may be roughly a frame structure of rectangular. The input frame 310 forms an input cavity 311, and the input cavity 311 extends along the vertical direction. The input frame 310 is fixed at the position of the input hole 122 on the supporting seat 120, so that the input cavity 311 is connected with the accommodating cavity 121 through the input hole 122. The input bracket 320 is located in the input cavity 311, and the input bracket 320 is connected with the input frame 310 in a sliding manner, so that the input bracket 320 can move back and forth along the vertical direction relative to the input frame 310. The input power source 330 may include an input synchronous belt 331 and an input motor 332. The input bracket 320 may be fixed on the tight edge or the loose edge of the input synchronous belt 331. The input motor 332 is fixed on the input frame 310 and configured to drive the input synchronous belt 331 to move, so that the tight edge or the loose edge of the input synchronous belt 331 moves in a straight line along the vertical direction, and then the input synchronous belt 331 drives the input bracket 320 to move up and down. The input bracket 320 is configured to carry the bearing box 20 holding the reaction vessel 30. The input bracket 320 may carry multiple bearing boxes 20, and the multiple bearing boxes 20 may be superposed in the input cavity 311 along the vertical direction. The width of the input bracket 320 is less than the diameter of the input hole 122 and the gap between the two conveyor belt units 211, so that the input bracket 320 can pass through the gap between the input hole 122 and the two conveyor belt units 211 in the vertical direction. In view of the fact that the width of the input bracket 320 is less than the gap between the two conveyor belt units 211, in the process that the input bracket 320 drives the bearing box 20 to move down, when the input bracket 320 moves below the gap between the two conveyor belt units 211, the conveyor belt unit 211 will interfere with the bearing box 20 to prevent it from moving down following the input bracket 320. In this way, the bearing box 20 can be automatically carried on the two conveyor belt units 211 without other auxiliary parts, thus simplifying the structure of the circulating device 10 and making the volume of the circulating device 10 smaller.

The supporting plate 340 may be rotationally arranged on the supporting seat 120 through a bearing, so that the supporting plate 340 can rotate around the central axis extending along the sliding direction of the supporting seat 120. The maximum rotation angle of the supporting plate 340 may be 90°. The motor 350 is arranged on the supporting seat 120, and the motor 350 may drive the supporting plate 340 to rotate. When the supporting plate 340 is in the horizontal state, the supporting plate 340 is at a supporting position, and can extend into the input cavity 311 and apply an upward support force to the lower surface 25b of the side cap 25 on the bearing box 20, thus playing the role of carrying the bearing box 20, and preventing the bearing box 20 above the supporting plate 340 from moving close to the conveyor belt unit 211. When the supporting plate 340 rotates upward from the horizontal state to the vertical state, the supporting plate 340 is at an avoiding position, and the supporting plate 340 will no longer support the side cap 25 of the bearing box 20, thus eliminating the interference effect of the supporting plate 340 on the bearing box 20. In this way, the bearing box 20 can move down close to the base 110 following the input bracket 320 until the bearing box 20 located at the bottom of the input bracket 320 is placed on the conveyor belt unit 211.

The input bracket 320 has multiple positions relative to input frame 310, such as the top position, the middle position, the supporting position, the initial position and the bottom position. In the vertical direction, the distances from the top position, the middle position, the supporting position, the initial position and the bottom position to the base 110 decrease in turn; it can also be simply understood that, in the vertical direction, the heights of the top position, the middle position, the supporting position, the initial position and the bottom position relative to the base 110 decrease in turn. The height of the conveyor unit 211 is higher than that of the bottom position. The input mechanism 300 may further include an input optocoupler 360. The number of the input optocouplers 360 may be four. The first optocoupler may be set close to the top of the input frame 310 and corresponds to the top position. The second optocoupler may be set in the middle of the input frame 310 and corresponds to the middle position. The third optocoupler may be set on the supporting plate 340 and corresponds to the supporting position. The fourth optocoupler may be set on the supporting seat 120 and corresponds to the initial position. By setting the optocouplers, whether there is the input bracket 320 or the bearing box 20 at the top position, the middle position, the supporting position and the initial position can be detected.

During operation, first, the supporting plate 340 rotates up to the avoiding position, and the input synchronous belt 331 drives the input bracket 320 to slide up to the top position, at this point, a plurality of bearing boxes 20 holding the reaction vessel 30 may be placed into the input cavity 311 so that the plurality of bearing boxes 20 are superposed on the input bracket 320, and the input bracket 320 applies an upward support force to the bottom surface 22 of the bearing box 20 at the bottom, so as to play the role of lifting and carrying the plurality of bearing boxes 20. Then, the input bracket 320 drives down the bearing box 20 to move close to the base 110, so that the input bracket 320 enters the accommodating cavity 121 through the input hole 122 and moves to the bottom position through the gap between the two conveyor belt units 211. When the bearing box 20 at the bottom moves down to leave the supporting position, the supporting plate 340 rotates down from the avoiding position to the supporting position, so that the supporting plate 340 applies an upward support force to the lower surface 25b of the side cap 25 of the bearing box 20 which is closest to the bearing box 20 at the bottom, so as to play the role of carrying the other multiple bearing boxes 20 located above the bearing box 20 at the bottom, prevent the other multiple bearing boxes 20 from moving down following the input bracket 320, and ensure that only one bearing box 20 at the bottom moves down following the input bracket 320. When the input bracket 320 moves to the bottom position, the bearing box 20 at the bottom will be carried on the two conveyor belt units 211. When the conveyor belt unit 211 moves, the bearing box 20 holding the reaction vessel 30 which is from the input mechanism 300 may be conveyed. After the bearing box 20 at the bottom is driven away by the conveyor belt unit 211, the bearing box 20 directly carried by the supporting plate 340 may be conveyed to the conveyor belt unit 211 referring to the above operation method, until all the bearing boxes 20 on the input bracket 320 are successively conveyed to the conveyor belt unit 211. It is apparent that before the next bearing box 20 is conveyed to the conveyor belt unit 211, it is necessary to move upward all the bearing boxes 20 of the bracket for a set distance through the input bracket 320, so as to provide avoiding space for the supporting plate 340 to move from the supporting position to the avoiding position, and then the next bearing box 20 can eliminate the interference of the supporting plate 340 to be smoothly carried on the conveyor belt unit 211.

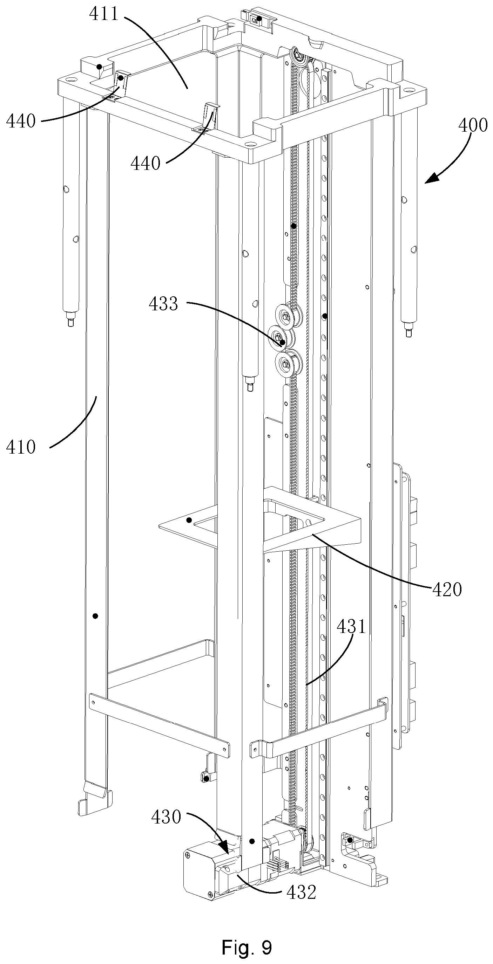

Referring to Fig. 2, Fig. 3 and Fig. 9, according to claim 1, the output mechanism 400 includes an output frame 410 and an output bracket 420. The output mechanism 400 further includes an output power source 430, and an elastic element 440. The output frame 410 may be frame structure of rectangular. The output frame 410 forms an output cavity 411, and the output cavity 411 extends along the vertical direction. The output frame 410 may be located above the part, which is exposed outside the accommodating cavity 121, of the conveyor belt unit 211. The output bracket 420 is in the output cavity 411. The output bracket 420 is connected with the output frame 410 in a sliding manner, so that the output bracket 420 moves back and forth along the vertical direction relative to the output frame 410. The output power source 430 may include an output synchronous belt 431, an output motor 432, and an idle pulley 433. The output bracket 420 may be fixed on the tight edge or the loose edge of the output synchronous belt 431. The output motor 432 is fixed on the output frame 410 and configured to drive the output synchronous belt 431 to move, so that the tight edge or the loose edge of the output synchronous belt 431 moves in a straight line along the vertical direction, and then the output synchronous belt 431 drives the output bracket 420 to move up and down. The output bracket 420 may apply an upward support force to the bottom surface 22 of the bearing box 20, so that the output bracket 420 can be used to carry the bearing box 20 holding the reaction vessel 30, and the output bracket 420 can drive the bearing box 20 to move upward in the output cavity 411. The width of the output bracket 420 is less than the gap between the two conveyor belt units 211, so that the output bracket 420 can pass through the gap between the two conveyor belt units 211 in the vertical direction. There may be a plurality of idle pulleys 433, for example, 3. The idler pulley 433 is arranged on the output frame 410, and the output synchronous belt 431 is wound on the idler pulley 433. By setting the idle pulley 433, the sliding safety of the output bracket 420 can be improved, and the output bracket 420 can be prevented from speeding down under the action of gravity and load in case of power failure.

The output bracket 420 has multiple positions relative to the output frame 410, such as the top position, the initial position and the bottom position. In the vertical direction, the distances from the top position, the initial position and the bottom position to the base 110 decrease in turn; it can also be simply understood that, in the vertical direction, the heights of the top position, the initial position and the bottom position relative to the base 110 decrease in turn. The height of the conveyor unit 211 is higher than that of the bottom position. The output mechanism 400 may further include an output optocoupler 450. The number of the output optocouplers 450 may be three. The first optocoupler may be set close to the top of the output frame 410 and corresponds to the top position. The second optocoupler may be set close to the bottom of the output frame 410 and corresponds to the initial position. The third optocoupler is set on the output frame 410 and is closer to the base 110 than the second optocoupler. The third optocoupler corresponds to the bottom position. By setting the optocouplers, whether there is the output bracket 420 or the bearing box 20 at the top position, the initial position and the bottom position can be detected.

The output mechanism 400 may further include an elastic element 440. The elastic element 440 is arranged at the top of the output frame 410. It is apparent that the top of the output box 410 is set away from the conveyor belt unit 211. When the output bracket 420 drives the bearing box 20 to move in the output cavity 411 up to the top of the output frame 410, the elastic element 440 may abut against the bearing box 20, so as to fix the bearing box 20 on the output frame 410. After the bearing box 20 is fixed, the reaction vessel 30 in the bearing box 20 may be taken away by a manipulator.

During operation, first, when the conveyor belt unit 211 conveys the bearing box 20 holding the reaction vessel 30 which is from the input mechanism 300 to the position below the output frame 410, the output bracket 420 at the bottom position moves up, and will pass through the gap between the two conveyor belt units 211 and enter the output cavity 411, so as to drive the bearing box 20 to detach from the conveyor belt unit 211 and enter the output cavity 411. When the output bracket 420 moves the bearing box 20 to the top of the output frame 410, the elastic element 440 fixes the bearing box 20 on the output frame 410, so that the manipulator can take away the reaction vessel 30 in the bearing box 20. Then, after all the reaction vessels 30 in the bearing box 20 are taken away, the elastic element 440 detaches from the bearing box 20, at this point, the output bracket 420 applies a support force to the bottom surface 22 of the bearing box 20, the reaction vessel 30 held by which has been unloaded, so as to drive the bearing box 20 to move down. When the output bracket 420 moves to the bottom position, the bearing box 20, the reaction vessel 30 held by which has been unloaded, will be carried on two conveyor belt units 211 so that the conveyor belt units 211 can convey the bearing box 20.

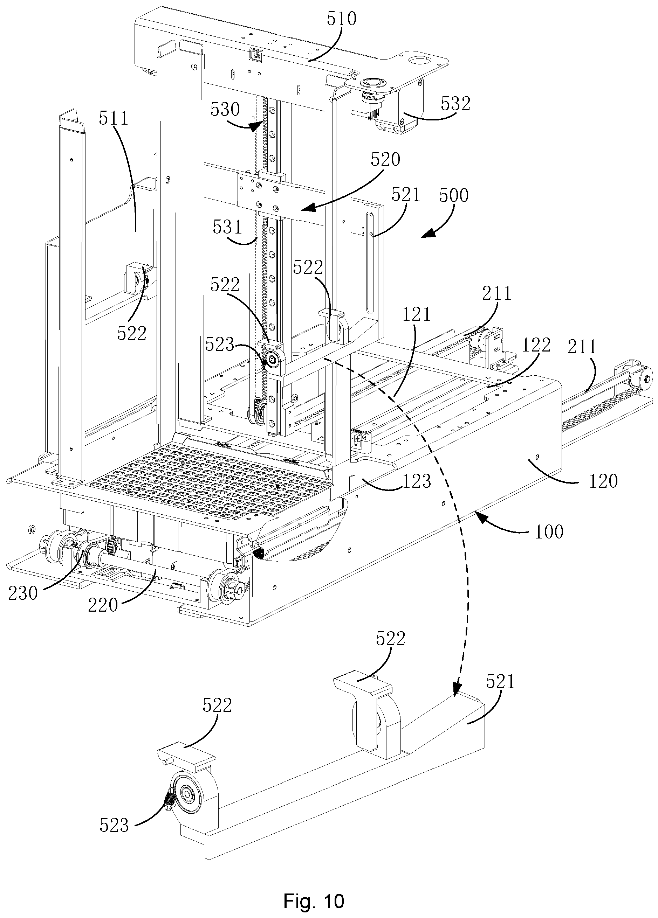

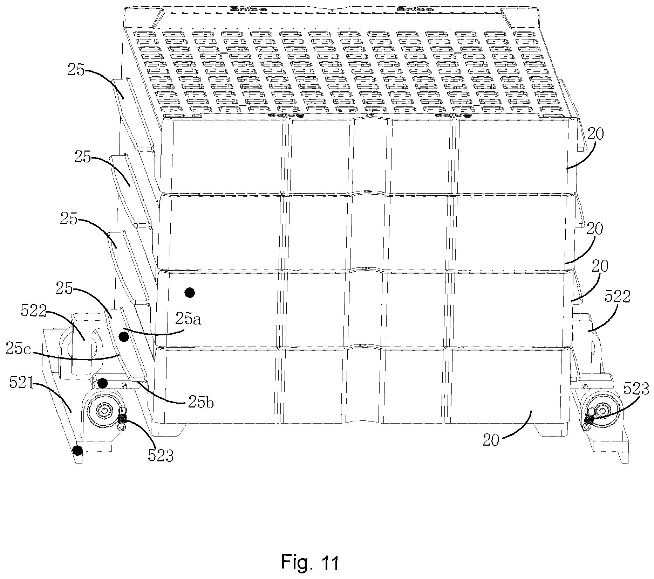

Referring to Fig. 2, Fig. 3, Fig. 10 and Fig. 11, in some embodiments, the recycling mechanism 500 includes a recycling frame 510, a recycling bracket 520, and a recycling power source 530. The recycling frame 510 may be frame structure of rectangular. The recycling frame 510 forms a recycling cavity 511, and the recycling cavity 511 extends along the vertical direction. The recycling box 510 is fixed at the position of the recycling hole 123 on the supporting seat 120, so that the recycling cavity 511 is connected with the accommodating cavity 121 through the recycling hole 123. The recycling bracket 520 is located in the recycling cavity 511, and the recycling bracket 520 is connected with the recycling frame 510 in a sliding manner, so that the recycling bracket 520 can move back and forth along the vertical direction relative to the recycling frame 510. The recycling power source 530 may include a recycling synchronous belt 531 and a recycling motor 532. The recycling bracket 520 may be fixed on the tight edge or the loose edge of the recycling synchronous belt 531. The recycling motor 532 is fixed on the recycling frame 510 and configured to drive the recycling synchronous belt 531 to move, so that the tight edge or the loose edge of the recycling synchronous belt 531 moves in a straight line along the vertical direction, and then the recycling synchronous belt 531 drives the recycling bracket 520 to move up and down. The recycling bracket 520 is configured to carry the bearing box 20, the reaction vessel 30 held by which has been unloaded. The recycling bracket 520 may carry multiple bearing boxes 20, and the multiple bearing boxes 20 may be superposed in the recycling cavity 511 along the vertical direction. The width of the recycling bracket 520 is less than the diameter of the recycling hole 123 and greater than the gap between the two conveyor belt units 211, so that the recycling bracket 520 can pass through the recycling hole 123 in the vertical direction, but the recycling bracket 520 can be prevented from entering the gap between the two conveyor belt units 211.

In some embodiments, the recycling bracket 520 includes a sliding part 521, a turning part 522 and an elastic part 523. The sliding part 521 is connected with the recycling box 510 in a sliding manner, and the sliding part 521 is fixedly connected to the recycling synchronous belt 531. The number of sliding parts 521 is two. The spacing direction of the two sliding parts 521 is the same as the spacing direction of the two conveyor belt units 211, and the spacing distance between the two sliding parts 521 is greater than the gap between the two conveyor belt units 211, so that the width of the recycling bracket 520 is greater than the gap between the two conveyor belt units 211. The turning part 522 is rotationally connected with the sliding part 521. The turning part 522 can rotate around the central axis extending parallel to the sliding direction of the supporting seat 120, so that the turning part 522 has a passing position and a carrying position, and the maximum rotation angle of the turning part 522 may be 90°. The elastic part 523 may be a spring. The elastic part 523 is connected between the sliding part 521 and the turning part 522. When the turning part 522 moves from the carrying position to the passing position, the turning part 522 overcomes the elastic force of the elastic part 523 to rotate, so that the elastic part 523 stores energy. When the elastic part 523 releases energy, the turning part 522 may automatically move from the passing position to the carrying position. When the turning part 522 is at the carrying position, the turning part 522 is in the horizontal state and applies a support force to the lower surface 25b of the side cap 25 of the bearing box 20, so that the recycling bracket 520 plays the role of carrying the bearing box 20 through the turning part 522. When the turning part 522 is at the passing position, the bearing box 20 allows the turning part 522 to move to the conveyor belt unit 211. The turning part 522 is in the vertical state to eliminate the interference to the side cap 25, so that the turning part 522 can cross the side cap 25. The recycling bracket 520 has multiple positions relative to the recycling frame 510, such as the top position, the initial position and the bottom position. In the vertical direction, the distances from the top position, the initial position and the bottom position to the base 110 decrease in turn; it can also be simply understood that, in the vertical direction, the heights of the top position, the initial position and the bottom position relative to the base 110 decrease in turn. The height of the conveyor unit 211 is higher than that of the bottom position. The recycling mechanism 500 may further include a recycling optocoupler 540. The number of the recycling optocouplers 540 may be three. The first optocoupler may be set close to the top of the recycling frame 510 and corresponds to the top position. The second optocoupler may be set close to the bottom of the recycling frame 510 and corresponds to the initial position. The third optocoupler is set on the recycling frame 510 and is closer to the base 110 than the second optocoupler. The third optocoupler corresponds to the bottom position. By setting the optocouplers, whether there is the recycling bracket 520 or the bearing box 20 at the top position, the initial position and the bottom position can be detected.

During operation, when the conveyor belt unit 211 conveys the bearing box 20, the reaction vessel 30 held by which has been unloaded, from the output mechanism 400 to the position below the recycling frame 510, and there is no bearing box 20 in the recycling cavity 511, first, the recycling bracket 520 is located above the bearing box 20, at this point, the recycling bracket 520 moves down, and the upper surface 25a of the side cap 25 of the bearing box 20 on the conveyor belt unit 211 applies an upward support force to the turning part 522, so that the turning part 522 starts to rotate from the carrying position; during the rotation of the turning part 522, the recycling bracket 520 continues moving down, and the interference force generated by the side cap 25 on the whole recycling bracket 520 decreases gradually; when the turning part 522 rotates to the passing position, the interference force generated by the side cap 25 is close to zero. Therefore, in the process that the turning part 522 rotates from the carrying position to the passing position, the side cap 25 can be prevented from interfering with the downward movement of the recycling bracket 520. After the recycling bracket 520 moves down for a set distance, the turning part 522 crosses the side 25c of the side cap 25. At the moment when the turning part 522 crosses the side 25c, the side cap 25 stops applying counter-pressure to the turning part 522, and the elastic part 523 releases energy to make the turning part 522 rotate down from the vertical state to the horizontal state, namely from the passing position to the carrying position, and then the turning part 522 can be below the lower surface 25b of the side cap 25. In view of the fact that the turning part 522 is below the lower surface 25b of the side cap 25, the recycling bracket 520 may be driven to move up, so that the turning part 522 applies a support force on the lower surface 25b of the side cap 25, so as to play the role of carrying and lifting the bearing box 20, and ensure that the recycling bracket 520 drives the bearing box 20 to move up. It is not necessary to take away the bearing box 20 on the recycling bracket 520 immediately, so that a reasonable number of bearing boxes 20 can be superposed on the recycling bracket 520, and finally the multiple bearing boxes 20 can be taken away once.

If there is already the bearing box 20 on the recycling bracket 520, and there is the bearing box 20 on the conveyor belt unit 211 below the recycling frame 510, it is necessary to transfer the bearing box 20 on the conveyor belt unit 211 to the recycling bracket 520. During operation, first, the recycling bracket 520 carrying the bearing box 20 moves down, so that the bearing box 20 at the bottom on the recycling bracket 520 is superposed on the bearing box 20 on the conveyor belt unit 211; at this point, on the one hand, the conveyor belt unit 211 and the bearing plate 241 of the transferring body 240 may play the role of carrying all the bearing boxes 20; on the other hand, there is a certain gap between the side caps 25 of the bearing box 20 at the bottom on the recycling bracket 520 and the bearing box 20 on the conveyor belt unit 211 in the vertical direction. It is apparent that when the recycling bracket 520 moves down in the gap, all the bearing boxes are in a state of rest, the upper surface 25a of the side cap 25 of the bearing box 20 on the conveyor belt unit 211 applies an upward support force to the turning part 522, so that the turning part 522 starts to rotate from the carrying position; during the rotation of the turning part 522, the recycling bracket 520 continues moving down, and the interference force generated by the side cap 25 on the whole recycling bracket 520 decreases gradually; when the turning part 522 rotates to the passing position, the interference force generated by the side cap 25 is close to zero. Therefore, in the process that the turning part 522 rotates from the carrying position to the passing position, the side cap 25 can be prevented from interfering with the downward movement of the recycling bracket 520. After the recycling bracket 520 moves down for a set distance, the turning part 522 crosses the side 25c of the side cap 25. At the moment when the turning part 522 crosses the side 25c, the side cap 25 stops applying counter-pressure to the turning part 522, and the elastic part 523 releases energy to make the turning part 522 rotate down from the vertical state to the horizontal state, namely from the passing position to the carrying position, and then the turning part 522 can be below the lower surface 25b of the side cap 25. In view of the fact that the turning part 522 is below the lower surface 25b of the side cap 25, it can be ensured that the recycling bracket 520 drives the bearing box 20 to move up. When there is the bearing box 20 on the conveyor belt unit 211 below the recycling frame 510 again, it may be transferred to the recycling bracket 520 by the above method.

In view of the fact that the spacing direction of the two sliding parts 521 is the same as the spacing direction of the two conveyor belt units 211, and the spacing distance between the two sliding parts 521 is greater than the gap between the two conveyor belt units 211, it is possible to avoid setting the two sliding parts 521 at intervals along the direction of movement of the bearing box 20 on the conveyor belt unit 211. In this way, on the one hand, it is possible to prevent the recycling of the synchronous belt 531 and other parts from occupying the space outside the recycling frame 510, so as to prevent the recycling of the synchronous belt 531 and other parts from affecting the user's operation; on the other hand, it is possible to prevent the sliding part 521 from interfering and hindering the movement of the bearing box 20, so that the conveyor belt unit 211 can drive the bearing box 20 to smoothly arrive at the recycling mechanism 500 from the output mechanism 400.

Referring to Fig. 2, Fig. 3 and Fig. 4, the operation principle of the whole circulating device 10 is described below.

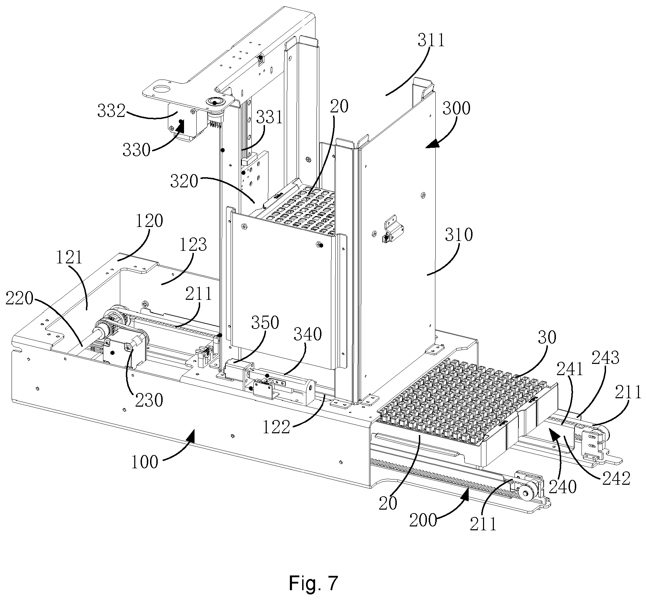

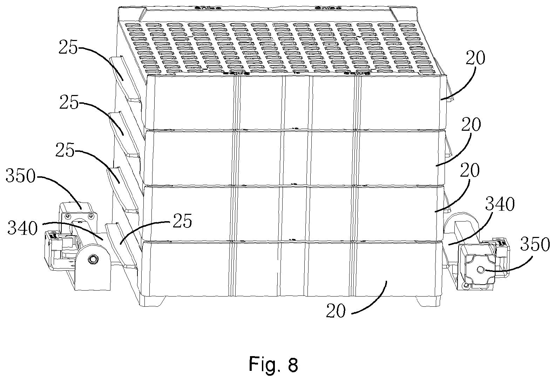

At the first step, the input bracket 320, the output bracket 420 and the recycling bracket 520 are set at the initial position (referring to Fig. 7 and Fig. 8), and the push-and-pull synchronous belt 131 drives the supporting seat 120 to move away from the output mechanism 400, which can be understood as the supporting seat 120 is drawn out like a drawer, so that the input mechanism 300 and the recycling mechanism 500 move, following the supporting seat 120, away from the output mechanism 400 to be drawn out; at this point, interference from the components and parts above the input mechanism 300 and the recycling mechanism 500 may be eliminated, so as to place the bearing box 20 holding the reaction vessel 30 into the input mechanism 300 or take away the bearing box 20 from the recycling mechanism 500 to unload the bearing box 20 holding the reaction vessel 30.

At the second step, the supporting plate 340 in the input mechanism 300 is moved up to the avoiding position, the input bracket 320 is moved up to the top position, and a number of bearing boxes 20 holding the reaction vessel 30 are superposed on the input bracket 320 in turn. It is apparent that after superposing a bearing box 20 on the input bracket 320 each time, the input bracket 320 moves down for a distance which is about equal to the height of a bearing box 20, so that the bearing boxes 20 superposed on the input bracket 320 are all in the input cavity 311. The push-and-pull synchronous belt 131 drives the supporting seat 120 to move close to the output mechanism 400, that is, the supporting seat 120 is pushed back into place like a drawer, so that the conveyor belt unit 211 exposed outside the accommodating cavity 121 is below the output cavity 411. Then, according to the operation principle of the input mechanism 300 mentioned above, the input mechanism 300 conveys one bearing box 20 holding the reaction vessel 30 to the conveyor belt unit 211 at a time.

At the third step, the output bracket 420 is moved from the initial position to the bottom position, and the conveyor belt unit 211 is moved, so as to convey the bearing box 20 holding the reaction vessel 30 from the input mechanism 300 to the position below the output cavity 411. The output bracket 420 moves up from the bottom position, so as to lift the bearing box 20 holding the reaction vessel 30 which is on the conveyor belt unit 211 to move up in the output cavity 411. According to the operation principle of the output mechanism 400 mentioned above, when all the reaction vessels 30 in the bearing box 20 are taken away, the output bracket 420 moves down to carry the bearing box 20, the reaction vessel 30 held by which has been unloaded, on the two conveyor belt units 211.

At the fourth step, according to the operation principle of the recycling mechanism 500 mentioned above, the conveyor belt unit 211 moves the bearing box 20, which is from the output mechanism 400 and the reaction vessel 30 held by which has been unloaded, to the position below the recycling cavity 511, so as to store multiple bearing boxes 20, the reaction vessel 30 held by which has been unloaded, in the recycling cavity 511. After the number of bearing boxes 20 in the recycling cavity 511 reaches the set number, the push-and-pull synchronous belt 131 drives the supporting seat 120 to move away from the output mechanism 400, so that the supporting seat 120 is drawn out; in this way, it is possible to prevent the interference of other parts above the recycling mechanism 500, and ensure that the bearing box 20, the reaction vessel 30 held by which has been unloaded, is taken away from the recycling cavity 511 for recycling. When the conveyor belt unit 211 moves the bearing box 20 from the position below the output cavity 411 to the position below the recycling cavity 511, the input bracket 320 may be at the initial position, so as to prevent the input bracket 320 from interfering with the moving bearing box 20.

By the cyclic operation of the first step to the fourth step, the conveyor belt unit 211 can convey the bearing box 20 holding the reaction vessel 30 from the input mechanism 300 to the output mechanism 400, so as to realize the output of the bearing box 20. This process is regarded as a process of outputting the bearing box. After the reaction vessel 30 on the bearing box 20 is unloaded on the output mechanism 400, the conveyor belt unit 211 conveys the bearing box 20, the reaction vessel 30 held by which has been unloaded from the output mechanism 400 to the recycling mechanism 500, so as to realize the recycling of the bearing box 20. This process is regarded as a process of recycling the bearing box. Therefore, in the process of outputting and recycling the bearing box, the outputting and recycling of the bearing box 20 is realized by the same conveyor belt unit 211, which avoids designing different conveying mechanisms to realize the two processes, thus omitting the setting of other conveying mechanisms. In this way, not only the structure of the whole circulating device 10 can be simplified, but also the volume of the whole circulating device 10 can be small, so the structure is more compact, and the instrument space occupied by the circulating device 10 is reduced.

It is apparent that since the tight edge or loose edge of the conveyor belt unit 211 moves in a straight line, the path of the conveyor belt unit 211 driving the bearing box 20 from the input mechanism 300 to the output mechanism 400 and the path from the output mechanism 400 to the recycling mechanism 500 are the same path, and the path may be a straight line. In this way, it can be ensured that the bearing box 20 always moves along the same path, the conveying efficiency and stability of the bearing box 20 can be improved, and the structure of the transferring mechanism 200 and the whole circulating device 10 can be greatly simplified. In other embodiments, when the positions of the input mechanism 300, the output mechanism 400 and the recycling mechanism 500 are not on the same straight line, the path may also be a broken line or camber line and other curves, such as triangular, round or oval.

The present invention also provides a sample analyzer, which includes the above circulating device 10. By including the above circulating device 10, the whole sample analyzer is simpler and more compact in structure.

## Claims

1. A circulating device for conveying a bearing box (20) with a reaction vessel (30), comprising: a mounting rack (100) and an input mechanism (300), an output mechanism (400), a recycling mechanism (500) and a transferring mechanism (200) arranged on the mounting rack (100); wherein,
the input mechanism (300) is configured to provide the bearing box (20) holding the reaction vessel (30) to the output mechanism;
the output mechanism (400) comprises an output frame (410) and an output bracket (420), wherein
the output bracket (420) is configured to move along a vertical direction relative to the output frame (410), the output bracket (420) is configured to carry the bearing box (20) holding the reaction vessel (30), so that when the output bracket (420) drives the bearing box (20) to move up to a top of the output frame (410), the reaction vessel (30) on the bearing box (20) can be unloaded ;
the recycling mechanism (500) is configured to recycle the bearing box (20), which has been conveyed from the output mechanism (400) after the reaction vessel (30) held by the bearing box has been unloaded;
the transferring mechanism (200) comprises a transferring component (210) corresponding to the input mechanism (300), the output mechanism (400) and the recycling mechanism (500) simultaneously;
the transferring component (210) is configured to not only convey the bearing box (20) holding the reaction vessel (30) from the input mechanism (300) to the output mechanism (400), but also convey the bearing box (20), the reaction vessel (30) held by which has been unloaded, from the output mechanism (400) to the recycling mechanism (500);
the transferring component (210) comprises two conveyor belt units (211) arranged at intervals along a direction perpendicular to gravity when the circulating device (10) is in use, and the bearing box (20) is carried on the conveyor belt unit (211); wherein
the mounting rack (100) comprises a base (110) and a supporting seat (120); the supporting seat (120) is connected with the base (110) in a sliding manner, the input mechanism (300) and the recycling mechanism (500) are both arranged on the supporting seat (120), and the output mechanism (400) is fixed on the base (110); the transferring mechanism (200) is arranged on the supporting seat (120);
the supporting seat (120) is provided with an accommodating cavity (121), an input hole (122) and a recycling hole (123); the input hole (122) and the recycling hole (123) are both communicated with the accommodating cavity (121), a part of the transferring component (210) is accommodated in the accommodating cavity (121), the input mechanism (300) is arranged at a position of the input hole (122), and the recycling mechanism (500) is arranged at a position of the recycling hole (123);
the conveyor belt unit (211) is configured to convey the bearing box (20) holding the reaction vessel (30) from the input mechanism (300) to the output mechanism (400), and after the reaction vessel (30) on the bearing box (20) is unloaded on the output mechanism (400), the conveyor belt unit (211) conveys the bearing box (20), the reaction vessel (30) held by which has been unloaded from the output mechanism (400) to the recycling mechanism (500).

2. The circulating device as claimed in claim 1, wherein a path of conveying the bearing box (20) from the input mechanism (300) to the output mechanism (400) and a path of conveying the bearing box (20) from the output mechanism (400) to the recycling mechanism (500) are a same path; and/or the input mechanism (300), the output mechanism (400) and the recycling mechanism (500) are all located on an upper side of the transferring component (210).

3. The circulating device as claimed in claim 1, further comprising: a push-and-pull synchronous belt (131), which is arranged on the base (110) and connected with the supporting seat (120).

4. The circulating device as claimed in claim 1, wherein the transferring component (210) also comprises a rotating shaft (220) and a driver (230); the two conveyor belt units (211) are respectively sleeved on opposite ends of the rotating shaft (220), and the driver (230) is located between the two conveyor belt units (211) and drives the rotating shaft (220) to rotate.

5. The circulating device as claimed in claim 1, wherein the transferring mechanism (200) also comprises transferring bodies (240) in one-to-one correspondence with the conveyor belt units (211); each of the transferring bodies (240) comprises a bearing plate (241) and a fixing plate (242) and a limiting plate (243) which are connected to opposite sides of the bearing plate (241), respectively; the fixing plate (242) and the limiting plate (243) are separately located on opposite sides in a thickness direction of the bearing plate (241); the bearing plate (241) is penetrated in a gap between a tight edge and a loose edge of the conveyor belt unit (211); and the fixing plate (242) and the limiting plate (243) are separately located on two sides of the conveyor belt unit (211).

6. The circulating device as claimed in claim 1, wherein the input mechanism (300) comprises an input bracket (320) for carrying the bearing box (20); a width of both the input bracket (320) and the output bracket (420) is less than a gap between the two conveyor belt units (211); both the input bracket (320) and the output bracket (420) move along a direction of gravity relative to the mounting rack (100), and the bearing box (20) moves on the transferring component (210) along a direction perpendicular to gravity.

7. The circulating device as claimed in claim 1, wherein the input mechanism (300) also comprises a supporting plate (340) rotationally arranged on the mounting rack (100); the supporting plate (340) can rotate around a central axis perpendicular to a direction of gravity to have an avoiding position and a supporting position; the supporting plate (340) departs from the bearing box (20) at the avoiding position, and carries the bearing box (20) at the supporting position; the input mechanism (300) also comprises a motor (350) arranged on the mounting rack (100); the motor (350) drives the supporting plate (340) to rotate.

8. The circulating device as claimed in claim 1, wherein the recycling mechanism (500) comprises a recycling bracket (520) for carrying the bearing box (20); a width of the recycling bracket (520) is greater than a gap between the two conveyor belt units (211); the recycling bracket (520) moves along the direction of gravity relative to the mounting rack (100), and the bearing box (20) moves on the transferring component (210) along a direction perpendicular to gravity.

9. The circulating device as claimed in claim 8, wherein the recycling bracket (520) comprises a sliding part (521) and a turning part (522) which are rotationally connected; the sliding part (521) can slide relative to the mounting rack (100), the turning part (522) can rotate around a central axis perpendicular to a direction of gravity to have a carrying position, and the turning part (522) can carry the bearing box (20) at the carrying position; during the sliding part (521) moves close to the conveyor belt unit (211), the bearing box (20) can push the turning part (522) to rotate away from the carrying position.

10. The circulating device as claimed in claim 9, wherein the recycling bracket (520) also comprises an elastic part (523); the elastic part (523) is connected between the sliding part (521) and the turning part (522); the elastic part (523) stores energy when the turning part (522) moves away from the carrying position, and the elastic part (523) releases energy so that the turning part (522) moves close to the carrying position.

11. The circulating device as claimed in claim 9, wherein a number of the sliding parts (521) is two; a spacing direction of the two sliding parts (521) is the same as a spacing direction of the two conveyor belt units (211), and a spacing distance between the two sliding parts (521) is greater than a gap between the two conveyor belt units (211).

12. A sample analyzer, comprising the circulating device (10) as claimed in any one of claims 1 to 11.

## Patentansprüche

1. Zirkulationsvorrichtung zum Fördern eines Lagerkastens (20) mit einem Reaktionsgefäß (30), umfassend: ein Montagegestell (100) und einen Eingabemechanismus (300), einen Ausgabemechanismus (400), einen Rezyklierungsmechanismus (500) und einen Übertragungsmechanismus (200), die auf dem Montagegestell (100) angeordnet sind; wobei
der Eingabemechanismus (300) konfiguriert ist, um den Lagerkasten (20), der das Reaktionsgefäß (30) hält, dem Ausgabemechanismus bereitzustellen;
der Ausgabemechanismus (400) einen Ausgaberahmen (410) und einen Ausgabeträger (420) umfasst, wobei
wobei der Ausgabeträger (420) konfiguriert ist, um sich entlang einer vertikalen Richtung relativ zum Ausgaberahmen (410) zu bewegen, wobei der Ausgabeträger (420) konfiguriert ist, um den Lagerkasten (20) zu tragen, der das Reaktionsgefäß (30) hält, sodass, wenn der Ausgabeträger (420) den Lagerkasten (20) antreibt, um sich bis zur Oberseite des Ausgaberahmens (410) zu bewegen, das Reaktionsgefäß (30) auf dem Lagerkasten (20) entladen werden kann;
der Rezyklierungsmechanismus (500) konfiguriert ist, um den Lagerkasten (20) zu rezyklieren, der vom Ausgabemechanismus (400) gefördert wurde, nachdem das von dem Lagerkasten gehaltene Reaktionsgefäß (30) entladen wurde;
der Übertragungsmechanismus (200) eine Übertragungskomponente (210) umfasst, die gleichzeitig dem Eingabemechanismus (300), dem Ausgabemechanismus (400) und dem Rezyklierungsmechanismus (500) entspricht; die Übertragungskomponente (210) konfiguriert ist, um nicht nur den Lagerkasten (20), der das Reaktionsgefäß (30) hält, vom Eingabemechanismus (300) zum Ausgabemechanismus (400) zu fördern, sondern auch den Lagerkasten (20), von dem das Reaktionsgefäß (30) gehalten wurde und der entladen wurde, vom Ausgabemechanismus (400) zum Rezyklierungsmechanismus (500) zu fördern;
die Übertragungskomponente (210) zwei Förderbandeinheiten (211) umfasst, die in Abständen entlang einer Richtung senkrecht zur Schwerkraft angeordnet sind, wenn die Zirkulationsvorrichtung (10) in Betrieb ist und wobei der Lagerkasten (20) auf der Förderbandeinheit (211) getragen wird;
wobei
das Montagegestell (100) eine Basis (110) und einen Stützsitz (120) umfasst; der Stützsitz (120) mit der Basis (110) verschiebbar verbunden ist, der Eingabemechanismus (300) und der Rezyklierungsmechanismus (500) beide auf dem Stützsitz (120) angeordnet sind und der Ausgabemechanismus (400) auf der Basis (110) befestigt ist; der Übertragungsmechanismus (200) auf dem Stützsitz (120) angeordnet ist;
der Stützsitz (120) mit einem Aufnahmehohlraum (121), einem Eingabeloch (122) und einem Rezyklierungsloch (123) versehen ist; das Eingabeloch (122) und das Rezyklierungsloch (123) beide mit dem Aufnahmehohlraum (121) in Verbindung stehen, ein Teil der Übertragungskomponente (210) in dem Aufnahmehohlraum (121) aufgenommen ist, der Eingabemechanismus (300) an einer Position des Eingabelochs (122) angeordnet ist und der Rezyklierungsmechanismus (500) an einer Position des Rezyklierungslochs (123) angeordnet ist;
die Förderbandeinheit (211) konfiguriert ist, um den Lagerkasten (20), der das Reaktionsgefäß (30) hält, vom Eingabemechanismus (300) zum Ausgabemechanismus (400) zu fördern und nachdem das Reaktionsgefäß (30) auf dem Lagerkasten (20) auf den Ausgabemechanismus (400) entladen wurde, die Förderbandeinheit (211) den Lagerkasten (20), von dem das Reaktionsgefäß (30) gehalten und der von dem Ausgabemechanismus (400) entladen wurde, zu dem Rezyklierungsmechanismus (500) fördert.

2. Zirkulationsvorrichtung nach Anspruch 1, wobei ein Weg zum Fördern des Lagerkastens (20) vom Eingabemechanismus (300) zum Ausgabemechanismus (400) und ein Weg zum Fördern des Lagerkastens (20) vom Ausgabemechanismus (400) zum Rezyklierungsmechanismus (500) ein und derselbe Weg sind; und/oder der Eingabemechanismus (300), der Ausgabemechanismus (400) und der Rezyklierungsmechanismus (500) alle an einer Oberseite der Übertragungskomponente (210) positioniert sind.

3. Zirkulationsvorrichtung nach Anspruch 1, ferner umfassend: einen Zieh- und Schiebesynchronriemen (131), der auf der Basis (110) angeordnet und mit dem Stützsitz (120) verbunden ist.

4. Zirkulationsvorrichtung nach Anspruch 1, wobei die Übertragungskomponente (210) außerdem eine rotierende Welle (220) und einen Antrieb (230) umfasst; die beiden Förderbandeinheiten (211) jeweils auf gegenüberliegenden Enden der rotierenden Welle (220) aufgesteckt sind und der Antrieb (230) zwischen den beiden Förderbandeinheiten (211) positioniert ist und die rotierende Welle (220) in Rotation versetzt.

5. Zirkulationsvorrichtung nach Anspruch 1, wobei der Übertragungsmechanismus (200) auch Übertragungskörper (240) umfasst, die in einer Eins-zu-Eins-Korrespondenz mit den Förderbandeinheiten (211) stehen; jeder der Übertragungskörper (240) eine Lagerplatte (241) und eine Befestigungsplatte (242) sowie eine Begrenzungsplatte (243) umfasst, die jeweils mit gegenüberliegenden Seiten der Lagerplatte (241) verbunden sind; die Befestigungsplatte (242) und die Begrenzungsplatte (243) separat auf gegenüberliegenden Seiten in einer Dickenrichtung der Lagerplatte (241) positioniert sind; die Lagerplatte (241) in eine Lücke zwischen einem festen Rand und einem losen Rand der Förderbandeinheit (211) eindringt; und die Befestigungsplatte (242) und die Begrenzungsplatte (243) separat an zwei Seiten der Förderbandeinheit (211) positioniert sind.

6. Zirkulationsvorrichtung nach Anspruch 1, wobei der Eingabemechanismus (300) eine Eingabeklammer (320) zum Tragen des Lagerkastens (20) umfasst; die Breite sowohl der Eingabeklammer (320) als auch des Ausgabeträgers (420) kleiner ist als eine Lücke zwischen den beiden Förderbandeinheiten (211); sich sowohl die Eingabeklammer (320) als auch der Ausgabeträger (420) relativ zum Montagegestell (100) entlang einer Schwerkraftrichtung bewegen und sich der Lagerkasten (20) auf der Übertragungskomponente (210) entlang einer zur Schwerkraft senkrechten Richtung bewegt.

7. Zirkulationsvorrichtung nach Anspruch 1, wobei der Eingabemechanismus (300) außerdem eine Stützplatte (340) umfasst, die rotierend auf dem Montagegestell (100) angeordnet ist; die Stützplatte (340) sich um eine Zentralachse senkrecht zur Schwerkraftrichtung rotieren kann, um eine Ausweichposition und eine Stützposition einzunehmen; die Stützplatte (340) sich in der Ausweichposition vom Lagerkasten (20) entfernt und den Lagerkasten (20) in der Stützposition trägt; der Eingabemechanismus (300) außerdem einen Motor (350) umfasst, der auf dem Montagegestell (100) angeordnet ist; der Motor (350) die Stützplatte (340) in Rotation versetzt.

8. Zirkulationsvorrichtung nach Anspruch 1, wobei der Rezyklierungsmechanismus (500) eine Rezyklierungshalterung (520) zum Tragen des Lagerkastens (20) umfasst; eine Breite der Rezyklierungshalterung (520) größer als eine Lücke zwischen den beiden Förderbandeinheiten (211) ist; sich die Rezyklierungshalterung (520) relativ zum Montagegestell (100) in Schwerkraftrichtung bewegt und sich der Lagerkasten (20) auf der Übertragungskomponente (210) entlang einer zur Schwerkraft senkrechten Richtung bewegt.

9. Zirkulationsvorrichtung nach Anspruch 8, wobei die Rezyklierungshalterung (520) ein Gleitteil (521) und ein Drehteil (522) umfasst, die rotierend miteinander verbunden sind; das Gleitteil (521) relativ zum Montagegestell (100) gleiten kann, das Drehteil (522) sich um eine Zentralachse senkrecht zur Schwerkraftrichtung rotieren kann, um eine Trageposition einzunehmen und das Drehteil (522) den Lagerkasten (20) in der Trageposition tragen kann; während sich das Gleitteil (521) in die Nähe der Förderbandeinheit (211) bewegt, der Lagerkasten (20) das Drehteil (522) weg von der Trageposition rotieren kann.

10. Zirkulationsvorrichtung nach Anspruch 9, wobei die Rezyklierungshalterung (520) auch ein elastisches Teil (523) umfasst; das elastische Teil (523) zwischen dem Gleitteil (521) und dem Drehteil (522) verbunden ist; das elastische Teil (523) Energie speichert, wenn sich das Drehteil (522) von der Trageposition wegbewegt und das elastische Teil (523) Energie freisetzt, sodass sich das Drehteil (522) nahe an die Trageposition bewegt.

11. Zirkulationsvorrichtung nach Anspruch 9, wobei die Anzahl der Gleitteile (521) zwei beträgt; die Abstandsrichtung der beiden Gleitteile (521) mit der Abstandsrichtung der beiden Förderbandeinheiten (211) übereinstimmt und eine Abstanddistanz zwischen den beiden Gleitteilen (521) größer ist als eine Lücke zwischen den beiden Förderbandeinheiten (211).

12. Probenanalysator, umfassend die Zirkulationsvorrichtung (10) nach einem der Ansprüche 1 bis 11.

## Revendications

1. Dispositif de circulation pour le transport d'une boîte porteuse (20) avec un récipient de réaction (30), comprenant : un rack de montage (100) et un mécanisme d'entrée (300), un mécanisme de sortie (400), un mécanisme de recyclage (500) et un mécanisme de transfert (200) agencés sur le rack de montage (100) ; dans lequel, le mécanisme d'entrée (300) est configuré pour fournir la boîte porteuse (20) contenant le récipient de réaction (30) au mécanisme de sortie ;
le mécanisme de sortie (400) comprend un cadre de sortie (410) et un support de sortie (420), dans lequel
le support de sortie (420) est configuré pour se déplacer le long d'une direction verticale par rapport au cadre de sortie (410), le support de sortie (420) est configuré pour porter la boîte porteuse (20) contenant le récipient de réaction (30), de sorte que lorsque le support de sortie (420) entraîne la boîte porteuse (20) pour se déplacer jusqu'à un sommet du cadre de sortie (410), le récipient de réaction (30) sur la boîte porteuse (20) peut être déchargé ;
le mécanisme de recyclage (500) est configuré pour recycler la boîte porteuse (20), qui a été transportée depuis le mécanisme de sortie (400) après que le récipient de réaction (30) contenu dans la boîte porteuse a été déchargé ;
le mécanisme de transfert (200) comprend un composant de transfert (210) correspondant simultanément au mécanisme d'entrée (300), au mécanisme de sortie (400) et au mécanisme de recyclage (500) ;
le composant de transfert (210) est configuré pour non seulement transporter la boîte porteuse (20) contenant le récipient de réaction (30) du mécanisme d'entrée (300) au mécanisme de sortie (400), mais également transporter la boîte porteuse (20), dont le récipient de réaction (30) a été déchargé, du mécanisme de sortie (400) au mécanisme de recyclage (500) ;
le composant de transfert (210) comprend deux unités de bande transporteuse (211) agencées à intervalles le long d'une direction perpendiculaire à la gravité lorsque le dispositif de circulation (10) est en cours d'utilisation, et la boîte porteuse (20) est portée sur l'unité de bande transporteuse (211) ;
dans lequel
le rack de montage (100) comprend une base (110) et un siège de support (120) ; le siège de support (120) est connecté à la base (110) de manière coulissante, le mécanisme d'entrée (300) et le mécanisme de recyclage (500) sont tous deux agencés sur le siège de support (120), et le mécanisme de sortie (400) est fixé sur la base (110) ; le mécanisme de transfert (200) est agencé sur le siège de support (120) ;
le siège de support (120) est pourvu d'une cavité de logement (121), d'un trou d'entrée (122) et d'un trou de recyclage (123) ; le trou d'entrée (122) et le trou de recyclage (123) sont tous deux en communication avec la cavité de logement (121), une partie du composant de transfert (210) est logée dans la cavité de logement (121), le mécanisme d'entrée (300) est agencé à une position du trou d'entrée (122), et le mécanisme de recyclage (500) est agencé à une position du trou de recyclage (123) ;
l'unité de bande transporteuse (211) est configurée pour transporter la boîte porteuse (20) contenant le récipient de réaction (30) du mécanisme d'entrée (300) au mécanisme de sortie (400), et après que le récipient de réaction (30) sur la boîte porteuse (20) est déchargé sur le mécanisme de sortie (400), l'unité de bande transporteuse (211) transporte la boîte porteuse (20), dont le récipient de réaction (30) a été déchargé du mécanisme de sortie (400) au mécanisme de recyclage (500).

2. Dispositif de circulation selon la revendication 1, dans lequel un chemin de transport de la boîte porteuse (20) du mécanisme d'entrée (300) au mécanisme de sortie (400) et un chemin de transport de la boîte porteuse (20) du mécanisme de sortie (400) au mécanisme de recyclage (500) sont un même chemin ; et/ou le mécanisme d'entrée (300), le mécanisme de sortie (400) et le mécanisme de recyclage (500) sont tous situés sur un côté supérieur du composant de transfert (210).

3. Dispositif de circulation selon la revendication 1, comprenant également : une courroie synchrone à poussée et traction (131), qui est agencée sur la base (110) et connectée au siège de support (120).

4. Dispositif de circulation selon la revendication 1, dans lequel le composant de transfert (210) comprend également un arbre rotatif (220) et un entraînement (230) ; les deux unités de bande transporteuse (211) sont respectivement emmanchées sur les extrémités opposées de l'arbre rotatif (220), et l'entraînement (230) est situé entre les deux unités de bande transporteuse (211) et entraîne l'arbre rotatif (220) en rotation.

5. Dispositif de circulation selon la revendication 1, dans lequel le mécanisme de transfert (200) comprend également des corps de transfert (240) en correspondance biunivoque avec les unités de bande transporteuse (211) ; chacun des corps de transfert (240) comprend une plaque d'appui (241) et une plaque de fixation (242) et une plaque de limitation (243) qui sont respectivement connectées aux côtés opposés de la plaque d'appui (241) ; la plaque de fixation (242) et la plaque de limitation (243) sont situées séparément sur des côtés opposés dans la direction de l'épaisseur de la plaque d'appui (241) ; la plaque d'appui (241) pénètre dans un espace entre un bord serré et un bord lâche de l'unité de bande transporteuse (211) ; et la plaque de fixation (242) et la plaque de limitation (243) sont situées séparément sur deux côtés de l'unité de bande transporteuse (211).

6. Dispositif de circulation selon la revendication 1, dans lequel le mécanisme d'entrée (300) comprend un support d'entrée (320) pour porter la boîte porteuse (20) ; une largeur à la fois du support d'entrée (320) et du support de sortie (420) est inférieure à un espace entre les deux unités de bande transporteuse (211) ; à la fois le support d'entrée (320) et le support de sortie (420) se déplacent le long d'une direction de gravité par rapport au rack de montage (100), et la boîte porteuse (20) se déplace sur le composant de transfert (210) le long d'une direction perpendiculaire à la gravité.

7. Dispositif de circulation selon la revendication 1, dans lequel le mécanisme d'entrée (300) comprend également une plaque de support (340) agencée en rotation sur le rack de montage (100) ; la plaque de support (340) peut tourner autour d'un axe central perpendiculaire à une direction de gravité pour avoir une position d'évitement et une position de support ; la plaque de support (340) s'écarte de la boîte porteuse (20) à la position d'évitement, et porte la boîte porteuse (20) à la position de support ; le mécanisme d'entrée (300) comprend également un moteur (350) agencé sur le rack de montage (100) ; le moteur (350) entraîne la plaque de support (340) en rotation.

8. Dispositif de circulation selon la revendication 1, dans lequel le mécanisme de recyclage (500) comprend un support de recyclage (520) pour porter la boîte porteuse (20) ; une largeur du support de recyclage (520) est supérieure à un espace entre les deux unités de bande transporteuse (211) ; le support de recyclage (520) se déplace le long de la direction de gravité par rapport au rack de montage (100), et la boîte porteuse (20) se déplace sur le composant de transfert (210) le long d'une direction perpendiculaire à la gravité.

9. Dispositif de circulation selon la revendication 8, dans lequel le support de recyclage (520) comprend une partie coulissante (521) et une partie tournante (522) qui sont connectées en rotation ; la partie coulissante (521) peut coulisser par rapport au rack de montage (100), la partie tournante (522) peut tourner autour d'un axe central perpendiculaire à une direction de gravité pour avoir une position de transport, et la partie tournante (522) peut porter la boîte porteuse (20) à la position de transport ; pendant que la partie coulissante (521) se rapproche de l'unité de bande transporteuse (211), la boîte porteuse (20) peut pousser la partie tournante (522) pour tourner à l'écart de la position de transport.

10. Dispositif de circulation selon la revendication 9, dans lequel le support de recyclage (520) comprend également une partie élastique (523) ; la partie élastique (523) est connectée entre la partie coulissante (521) et la partie tournante (522) ; la partie élastique (523) stocke de l'énergie lorsque la partie tournante (522) s'éloigne de la position de transport, et la partie élastique (523) libère de l'énergie de sorte que la partie tournante (522) se rapproche de la position de transport.

11. Dispositif de circulation selon la revendication 9, dans lequel le nombre de parties coulissantes (521) est de deux ; la direction d'espacement des deux parties coulissantes (521) est la même que la direction d'espacement des deux unités de bande transporteuse (211), et la distance d'espacement entre les deux parties coulissantes (521) est supérieure à l'espacement entre les deux unités de bande transporteuse (211).

12. Analyseur d'échantillons, comprenant le dispositif de circulation (10) selon l'une quelconque des revendications 1 à 11.
